# EUROPÄISCHE PATENTANMELDUNG

(11) **EP 3 175 704 A1**
(43) Veröffentlichungstag der Anmeldung: **07.06.2017**
(21) Anmeldenummer: 16199910.7
(22) Anmeldetag: 22.11.2016
(51) Int. Cl.: A01K 61/85, A01K 61/59, A01K 61/17

(54) **VERFAHREN ZUR TRENNUNG GESCHLÜPFTER ARTEMIA VON DEREN DAUEREIERN SOWIE SEPARATOR FÜR ARTEMIA-DAUEREIER**

(30) Priorität: 03.12.2015 DE 102015015609
(71) Anmelder: Remke, Lars, 33602 Bielefeld (DE)
(72) Erfinder: Remke, Lars, 33602 Bielefeld (DE)
(74) Vertreter: Thielking & Elbertzhagen Patentanwälte Partnerschaft mbB

(57) **Zusammenfassung**

Ein Verfahren zur Trennung ausgebrüteter und/oder unausgebrüteter Artemia-Dauereier (4) von bereits geschlüpfter Artemia (14), insbesondere Artemia salina, mittels eines Separators (1, 1a, 1b),
umfasst die folgenden Schritte:
- Festlegen unausgebrüteter Artemia-Dauereier (4) in oder an dem Separator (1, 1a, 1b),
- zumindest bereichsweises Einlegen des mit den Artemia-Dauereiern (4) ausgestatteten Separators (1, 1a, 1b) in Salzwasser,
- Ausbrüten wenigstens einiger der in oder an dem Separator (1, 1a, 1b) befestigten Artemia-Dauereier (4) innerhalb des Salzwassers (15) und
- Entfernen der nach dem zumindest teilweisen Schlüpfen von Artemia (14) verbleibenden ausgebrüteten und/oder unausgebrüteten Artemia-Dauereier (4) durch Entnahme des Separators (1, 1a, 1b) aus dem Salzwasser (15).

## Beschreibung

Die Erfindung betrifft ein Verfahren zur Trennung ausgebrüteter und/oder unausgebrüteter Artemia-Dauereier von bereits geschlüpfter Artemia, insbesondere Artemia salina, mit den Merkmalen im Oberbegriff von Patentanspruch 1. Weiterhin betrifft die Erfindung einen Separator zur Durchführung des Verfahrens zur Trennung ausgebrüteter und/oder unausgebrüteter Artemia-Dauereier von bereits geschlüpfter Artemia, insbesondere Artemia salina, mit den Merkmalen von Patentanspruch 5.

"Artemia" bezeichnet eine in Binnensalzgewässern natürlich beheimatete Gattung von Krebstieren. Zu deren wohl bekanntesten Vertretern zählt "Artemia salina" (Salinen- oder Salzkrebs). In wirtschaftlicher Hinsicht dient Artemia primär als Lebend-, Trocken- oder tiefgefrorenes Fischfutter. Aufgrund der Bedeutung für die Aquaristik und Aquakultur wurde das natürliche Vorkommen von Artemia auf deren gezielte Züchtung und Ernte ausgeweitet. Grundlage hierfür ist beispielsweise die Errichtung geeigneter Zuchtbecken, wobei aber auch mitunter vorhandene Teiche und Seen genutzt werden.

Die bei einigen Wassertieren vorhandene Möglichkeit zur Produktion sogenannter Dauereier steht auch Artemia zur Verfügung.

Artemia-Dauereier werden dann gebildet, wenn der Salzgehalt im Wasser steigt und so bevorstehende feindliche Umweltbedingungen anzeigt. Bei den Dauereiern handelt es sich um mehrzellige Zysten mit inaktivem Stoffwechsel, deren Schale gegenüber den sonst üblichen Artemia-Eiern dicker und somit widerstandsfähiger ist. Hierdurch ist ein auch erst nach vielen Jahren erfolgendes Ausbrüten möglich, wodurch diese Krebstiergattung beispielsweise eine periodische als auch langanhaltende Austrocknung ihres Lebensraumes überstehen kann.

Die vom eigentlichen Lebenszyklus der Artemia unabhängige Verwertbarkeit von Artemia-Dauereiern spielt insbesondere im Zierfischfutterbereich eine große Rolle. Neben deren langer und einfacher Lagerbarkeit kommt es dabei vor allem auf die bedarfsweise Verfügbarkeit der Artemia vor Ort an, welche durch gezieltes Ausbrüten ihrer Dauereier gegeben ist. Hierzu werden die Dauereier im Wesentlichen in mit Salz angereichertes Wasser (Salzwasser) eingelegt, woraufhin bereits 12 bis 36 Stunden später die ersten Primär-oder Eilarven (Nauplius bzw. Nauplien) der Artemia schlüpfen. Sowohl die erbrüteten Nauplien als auch die sich daraus entwickelnden adulten Krebstiere stehen so innerhalb kurzer Zeit zur Verfügung und können direkt verfüttert werden. Demgegenüber sollten die Dauereier selbst nur in geschälter Form angeboten werden (dekapsuliert), da deren unverdaulichen Schalen besonders bei Jungfischen zu Darmverschluss führen können.

Die DE 16 92 400 C3 offenbart hierzu ein Futtermittel für Zierfische, welches die Gestalt eines tablettenartigen Presskörpers besitzt. An einer ebenen Außenfläche des Presskörpers ist ein Haftmittel angeordnet, so dass dieser beispielsweise innerhalb eines Aquariums an einer Seitenscheibe festlegbar ist. Einen Anteil von 10% des Presskörpers bilden Artemia salina, welche in ausgebrüteter Form als gefriergetrocknete und somit tote Kleinkrebse enthalten sind. Den mit 23% größten Anteil bildet dabei Magermilchpulver. Als weitere Bestandteile sind u.a. zu jeweils 15% enthaltene, ebenfalls gefriergetrocknete Tubifexwürmer und rote Mückenlarven zu nennen, welche in Kombination mit einer einen Anteil von 18% aufweisenden Flockenfischfuttermischung allesamt durch ein geeignetes Bindemittel miteinander verbunden sind.

Aus der DE 16 92 500 A geht ein Futterpräparat für Wassertiere hervor, dessen zusammenhängende Futtermasse durch Feuchtigkeit aktivierbare Mittel zum Ankleben derselben an einer Fläche eines Aquariums aufweist. Das in der Futtermasse enthaltene tierische Material kann u.a. auf Schlammröhrenwürmer (Tubifex), Regenwürmer, Salinenkrebse (Artemia salina) oder Säugetierfleisch zurückgehen, wobei dessen Bestandteile ebenfalls in gefriergetrockneter Form vorliegen.

Ein weiteres Futtermittel für Heimtiere, wie etwa Zierfische, ist aus der DE 297 22 296 U1 bekannt. Das Futtermittel weist eine gelartige, aus mindestens einem Dickungs-und Geliermittel sowie Wasser gebildete Grundmasse auf und mindestens einen darin eingebrachten Futterrohstoff. Als Futterrohstoff können beispielsweise Meerestiere enthalten sein, welche in getrockneter und gemahlener Form vorliegen. Die gelartige Grundmasse ist dabei so gewählt, dass die darin enthaltenen Futterrohstoffe durch Herausreißen entnommen werden können.

Mit der EP 1 195 088 A1 und der EP 1 928 261 B1 wurden Verfahren bekannt, mit welchen sich in der Diapause befindende Artemia-Dauereier wieder reaktivierbar sind. Hierzu kommt beispielsweise Wasserstoffperoxid zum Einsatz.

Insbesondere die Unverträglichkeit der sowohl bereits ausgebrüteten als auch noch unausgebrüteten Dauereier macht es notwendig, diese vor dem Verfüttern in geeigneter Weise von bereits geschlüpften Artemia zu trennen. Als bereits ausgebrütete Dauereier bzw. Artemia-Dauereier werden im Rahmen der Erfindung deren nach dem Schlüpfen der Artemia (näherhin der Nauplien) verbleibenden unverdaulichen Reste verstanden, bei denen es sich primär um Schalen handelt. Als demgegenüber unausgebrütete Dauereier bzw. Artemia-Dauereier werden vorliegend solche verstanden, aus denen entweder noch keine Artemia geschlüpft ist und/oder aber ein Schlüpfen nicht möglich ist (defekt).

Im Zusammenhang mit einer sich verschlechternden Wasserqualität durch beim Schlüpfen von Wassertieren verbleibende Eierschalen schlägt die DE 601 06 926 T2 als deutsche Übersetzung der EP 1 304 031 B1 eine Inkubationsvorrichtung vor. Die in einem mit Wasser gefüllten Becken anordenbare Inkubationsvorrichtung umfasst einen Inkubationstank und einen Trenntank, welche über einen Verbindungsanschluss fluidleitend miteinander verbunden sind. Im Bereich des Verbindungsanschlusses weist der Trenntank eine Lichtabschirmfähigkeit auf, so dass dieser mit zunehmender Entfernung von dem Verbindungsanschluss in Bezug auf einfallendes Licht heller erscheint. Im Gebrauch können beispielsweise Salzwassershrimpeier in den Inkubationstank gegeben und ausgebrütet werden. Im Anschluss wandern die geschlüpften Salzwassershrimplarven aufgrund der Lichtabschirmfähigkeit aus eigener Kraft über den Verbindungsanschluss in den Trenntank, von wo aus sie über eine Seitenöffnung in das die Inkubationsvorrichtung umgebende Becken bzw. dessen Wasser gelangen können. Im Ergebnis verbleiben die unausgebrüteten Eier und/oder deren Schalen im Inkubationstank, von wo aus sie von Zeit zu Zeit entfernt werden können, ohne in das umgebende Wasserbecken einzudringen.

Auch wenn die bekannte Inkubationsvorrichtung ein einfaches Abtrennen bereits geschlüpfter Artemia ermöglicht, geht deren Herstellung mit entsprechendem Aufwand und Platzbedarf einher. Auch das Entfernen von in der Inkubationsvorrichtung sedimentierten Dauereiern und/oder deren Reste erfordert dessen kontrollierte Bedienung. Vor diesem Hintergrund bietet das gezielte Ausbrüten von Artemia-Dauereiern durchaus noch Raum für Verbesserungen.

Vor diesem Hintergrund liegt der vorliegenden Erfindung die Aufgabe zugrunde, ein Verfahren zur Trennung ausgebrüteter und/oder unausgebrüteter Artemia-Dauereier von bereits geschlüpfter Artemia dahingehend weiterzuentwickeln, dass sowohl das Ansetzen der Menge auszubrütender Dauereier als auch deren Abtrennung von bereits geschlüpfter Artemia verbessert und insgesamt vereinfacht durchführbar ist. Weiterhin soll ein kostengünstiges Entnahmeelement zur Durchführung des Verfahrens vorgestellt werden.

Die Aufgabe wird durch ein Verfahren zur Trennung ausgebrüteter und/oder unausgebrüteter Artemia-Dauereier von bereits geschlüpfter Artemia, insbesondere Artemia salina, mit den Merkmalen des Anspruchs 1 gelöst.

Erfindungsgemäß umfasst das Verfahren die folgenden Schritte:
- Festlegen unausgebrüteter Artemia-Dauereier in oder an einem Separator,
- zumindest bereichsweises Einlegen des mit den Artemia-Dauereiern ausgestatteten Separators in Salzwasser,
- Ausbrüten wenigstens einiger der in oder an dem Separator befestigten Artemia-Dauereier innerhalb des Salzwassers und
- Entfernen der nach dem zumindest teilweisen Schlüpfen von Artemia verbleibenden ausgebrüteten und/oder unausgebrüteten Artemia-Dauereier durch Entnahme des Separators aus dem Salzwasser.

Die sich hieraus ergebenden Vorteile sind primär auf das Festlegen der zunächst noch unausgebrüteten Artemia-Dauereier in oder an dem Separator zurückzuführen. Auf diese Weise ist sichergestellt, dass sowohl die unausgebrüteten bzw. nicht ausbrütbaren Dauereier als auch die Reste der bereits ausgebrüteten Dauereier (in der Regel deren Schalen) an dem Entnahmeelement verbleiben. Im Ergebnis ist so den Dauereiern ein Vorkommen in freier Form innerhalb des Salzwassers verwehrt, wodurch sowohl dessen etwaiger Eintrübung als auch einem unerwünschten Verzehr der Dauereier und deren Resten beispielsweise durch Zierfische wirksam vorgebeugt wird.

Das erfindungsgemäße Verfahren verbessert und vereinfacht auf diese Weise sowohl das Ansetzen der Menge auszubrütender Artemia-Dauereier als auch deren Abtrennung von bereits geschlüpfter Artemia in einem erheblichen Maß.

Durch das feste Bestücken des Separators mit unausgebrüteten Artemia-Dauereiern kann das anschließende Angebot an geschlüpfter Artemia in besonders genauer Weise geregelt werden. So kann beispielsweise die Form des Separators und/oder die Anzahl der daran festgelegten Artemia-Dauereier gezielt gewählt werden, um die gewünschte Menge geschlüpfter Artemia zu erhalten. Hiernach können beispielsweise verschiedenartige Separatoren genutzt werden, um eine definierte Menge an frei schwimmender Artemia zu erhalten. Insbesondere die anschließende Trennung der bereits geschlüpften Artemia ist in überaus einfacher und wirtschaftlicher Weise möglich, indem lediglich der Separator mit den daran befestigten Dauereiern (unausgebrütet, defekt, Schalen) aus dem Salzwasser entnommen und beispielsweise entsorgt wird.

Hinsichtlich der Festlegung der Dauereier an dem Separator sind grundsätzlich alle solche Maßnahmen denkbar, welche eine ausreichende Fixierung der Dauereier bewirken. Ausreichend meint, dass die unausgebrüteten als auch die ausgebrüteten Dauereier bzw. deren Reste sicher an dem Separator festgelegt sind. Nach einer besonders bevorzugten Maßnahme der Erfindung kann der Separator hierzu zumindest bereichsweise mit einem geeigneten Klebstoff benetzt werden. Als geeignet sind beispielsweise solche Klebstoffe anzusehen, welche eine Beständigkeit gegenüber Feuchtigkeit besitzen und keinen negativen Einfluss auf die Artemia insgesamt ausüben (beispielsweise durch ungeeignete Lösungsmittel).

So kann der Klebstoff vor oder während oder nach dem Bestücken des Separators mit unausgebrüteten Artemia-Dauereiern aufgebracht werden, so dass die Dauereier letztlich sicher an dem Separator fixiert sind. Denkbar wäre in diesem Zusammenhang beispielsweise ein Aufsprühen des Klebstoffs. So könnte der Separator beispielsweise vor dem Bestücken mit den Dauereiern zumindest bereichsweise mit Klebstoff besprüht werden, woraufhin die Dauereier beispielsweise auf den Klebstoff gestreut werden oder der Separator in eine Ansammlung an Dauereiern bewegt wird. Unabhängig von dem Weg der Dauereier auf den Separator muss hierbei lediglich sichergestellt werden, dass die Dauereier mit dem auf dem Separator aufgebrachten Klebstoff in Kontakt gelangen. Je nach Art des Klebstoffs wäre es insofern auch denkbar, dass das Benetzen des Separators mit Klebstoff während oder nach seiner Bestückung mit Artemia-Dauereiern durchgeführt wird.

Eine alternative erfindungsgemäße Maßnahme zur Festlegung von unausgebrüteten Artemia-Dauereiern an dem Separator sieht vor, dass der Separator bereits mit einem inaktiven Klebstoff ausgestattet ist. Inaktiv meint in diesem Zusammenhang, dass der Klebstoff zunächst keine adhäsive Eigenschaft aufweist, welche allerdings durch eine entsprechende Manipulation aktivierbar ist. So kann der Klebstoff so ausgestaltet sein, dass dieser erst durch ein Aktivierungsmittel, beispielsweise in Form von Licht und/oder Wärme und/oder einem Fluid hinsichtlich seiner adhäsive Eigenschaft aktivierbar ist. Die eigentliche Aktivierung des so ausgestalteten Klebstoffs kann dann vor, während oder erst nach dem Bestücken des Separators mit unausgebrüteten Artemia-Dauereiern erfolgen.

Die Erfindung sieht gemäß einer Weiterentwicklung des grundsätzlichen Erfindungsgedankens vor, dass der Separator eine Haltevorrichtung besitzen kann. Die Haltevorrichtung ist dabei so ausgestaltet, dass der Separator beispielsweise frei hängend nur über seine Haltevorrichtung gehalten werden kann. In diesem Zusammenhang ist ferner vorgesehen, dass das zum Ausbrüten der Artemia-Dauereier notwendige Salzwasser in einem geeigneten Behälter angeordnet ist. Bei dem Behälter kann es sich beispielsweise um ein Gefäß handeln, welches eine geeignete Zugangsmöglichkeit zu dem darin befindlichen Salzwasser aufweist. Selbstverständlich kann es sich hierbei auch direkt um ein Aquarium handeln. Ziel dieser Weiterentwicklung ist, dass der bereits mit Artemia-Dauereiern bestückte und in das Salzwasser eingelegte Separator über die Haltevorrichtung an einen Randbereich des Behälters angehängt und/oder an diesem abgestützt werden kann. Auf diese Weise ist eine überaus einfache Handhabung des Separators ermöglicht. So kann beispielsweise dessen bestimmungsgemäße Ausrichtung innerhalb des Salzwassers durch die Haltevorrichtung vorgegeben sein. Weiterhin oder in Ergänzung hierzu verhindert die Haltevorrichtung eine unerwünschte Bewegung des Separators innerhalb des Behälters; dies sowohl im Hinblick auf ein Abtauchen und somit schweres Erreichen des Separators unterhalb der Wasseroberfläche als auch ein Davonschwimmen.

Das nunmehr vorgestellte erfindungsgemäße Verfahren ermöglicht die Trennung ausgebrüteter und/oder unausgebrüteter Artemia-Dauereier von bereits geschlüpfter Artemia auf überaus wirtschaftliche und kostengünstige Weise.

So können Separatoren mit unterschiedlich bestückter Anzahl von Dauereiern genutzt werden, um die gewünschte Anzahl an frei schwimmender Artemia zu erbrüten. Hierdurch entfällt eine mitunter ungenaue Einschätzung unausgebrüteter loser Dauereier in Form von Schüttgut. Die sichere Fixierung der Dauereier an dem Separator ermöglicht deren im Anschluss an das Schlüpfen der Artemia erfolgende einfache sowie restlose Entfernung, so dass insbesondere eine unerwünschte Aufnahme loser Dauereier und/oder deren Reste in Form von Schalen beispielsweise durch Zierfische wirksam verhindert werden kann. Mit anderen Worten wird sowohl das Ansetzen der Menge auszubrütender Artemia-Dauereier als auch deren Abtrennung von bereits geschlüpfter Artemia in einem erheblichen Maße vereinfacht. Gegenüber mitunter aufwendigen Inkubatoren stellt der Separator zudem eine deutlich kostengünstigere und leicht zu handhabende Möglichkeit zum Erhalt von Artemia dar.

Weiterhin wird die obige Aufgabe auch durch einen Separator mit den Merkmalen des Anspruchs 5 gelöst. Dieser dient insbesondere zur Durchführung des zuvor aufgezeigten Verfahrens zur Trennung ausgebrüteter und/oder unausgebrüteter Artemia-Dauereier von bereits geschlüpfter Artemia, insbesondere Artemia salina.

Der erfindungsgemäße Separator ist dabei dergestalt, dass dieser einen geeigneten Basisträger besitzt, welcher mit unausgebrüteten Dauereiern bestückbar ist, was deren Festlegung an dem Basisträger meint. In vorteilhafter Weise ist der Basisträger so ausgebildet, dass dieser gegenüber dem Salzwasser unempfindlich und insofern zumindest wasserfest ist. Die Größe und/oder Form des Separators und/oder des Basisträgers kann in bevorzugter Weise an den jeweiligen Einsatzzweck angepasst sein. So kann beispielsweise eine in Bezug auf die Größe kleine Ausgestaltung für den Privatgebrauch dienen, während eine demgegenüber größere Ausgestaltung im Profi- und/oder Züchterbereich Verwendung finden kann.

Die sich durch den erfindungsgemäßen Separator ergebenden Vorteile wurden bereits im Zusammenhang mit dem zuvor aufgezeigten erfindungsgemäßen Verfahren näher erläutert, so dass zur Vermeidung von Wiederholungen an dieser Stelle auf die entsprechenden Ausführungen hierzu verwiesen wird. Dies gilt im Übrigen auch für die weiteren nachfolgend erläuterten vorteilhaften Ausgestaltungen des erfindungsgemäßen Separators.

Die Erfindung sieht in einer Weiterentwicklung des erfindungsgemäßen Separators vor, dass dessen Basisträger zumindest bereichsweise mit einem aktiven oder aktivierbaren Klebstoff ausgestattet ist. Dabei ist der Klebstoff dazu vorgesehen und ausgebildet, um die Artemia-Dauereier in oder an dem Basisträger zu fixieren.

In besonders vorteilhafter Weise kann der Klebstoff dabei dergestalt sein, dass dieser gegenüber dem Salzwasser unempfindlich und insofern zumindest wasserfest ist. Der Klebstoff kann in besonders bevorzugter Weise so ausgebildet sein, dass dieser keinen negativen Einfluss auf die Artemia insgesamt ausübt (beispielsweise durch ungeeignete Lösungsmittel).

Weiterhin kann der weiterentwickelte Separator in besonders bevorzugter Weise eine Haltevorrichtung besitzen. Die Haltevorrichtung ist dazu vorgesehen und ausgebildet, um den Separator beispielsweise an einen Randbereich eines mit Salzwasser befüllbaren Behälters anzuhängen und/oder an diesem abzustützen. Selbstverständlich muss es sich nicht zwingend um den Randbereich eines Behälters handeln. Alternativ kann der Behälter auch eine anderweitige Vorrichtung und/oder Ausprägung an geeigneter Stelle aufweisen, welche mit der Haltevorrichtung entsprechend korrespondiert.

Gemäß einer vorteilhaften Weiterbildung der Haltevorrichtung kann diese dergestalt sein, dass die Haltevorrichtung selbst zumindest teilweise als ein Ausschnitt des Basisträgers ausgebildet ist. Hierbei kann es sich beispielsweise um eine geeignete Öffnung des Basisträgers handeln, welche mit einer korrespondierenden Vorrichtung des Behälters zumindest teilweise in Eingriff gelangen kann. Alternativ oder in Ergänzung hierzu kann die Haltevorrichtung auch eine Ausstellung des Basisträgers aufweisen oder durch diese gebildet sein. Denkbar wäre hierbei beispielsweise eine Hinterschneidung, welche im Sinne einer hakenförmigen Ausgestaltung beispielsweise mit dem Randbereich des Behälters korrespondiert.

Selbstverständlich kann die Haltevorrichtung des Separators auch dazu dienen, diesen über die Haltevorrichtung beispielsweise hängend zu lagern.

Unabhängig davon oder in Ergänzung hierzu kann der Basisträger des Separators auch dergestalt sein, dass dieser im Sinne einer Wiederverwertung mehrfach genutzt wird. Denkbar wäre in diesem Zusammenhang ein nach dem Gebrauch des Separators mechanisches und/oder über ein geeignetes Lösungsmittel erfolgendes Entfernen der am dem Basisträger verbliebenden Dauereier und/oder deren Reste, um diesen im Anschluss erneut mit noch unausgebrüteten Dauereiern zu bestücken.

Nach einer weiteren Entwicklung des erfindungsgemäßen Separators kann dessen Basisträger bevorzugt plattenförmig oder streifenförmig ausgebildet sein. Eine derartige Ausgestaltung weist bei minimalem Materialeinsatz demgegenüber große Deckflächen bei gleichzeitig kleinen Abmessungen auf. Insbesondere die Deckflächen können hierbei in vorteilhafter Weise mit Artemia-Dauereiern bestückt werden. Selbstverständlich ist alternativ beispielsweise auch ein stabförmiger oder kugelförmiger Basisträger denkbar. Weiterhin kann der Basisträger beispielsweise an seinem unteren Ende ein höheres Gewicht aufweisen, so dass dessen Ausrichtung vorgegeben ist und einem etwaigen Aufschwimmen innerhalb des Salzwassers wirksam entgegengewirkt werden kann.

Weiterhin sieht die Erfindung einen Separator vor, in oder an dessen Basisträger bereits zumindest bereichsweise Artemia-Dauereier festgelegt bzw. fixiert sind.

Weitere Ausgestaltungen des erfindungsgemäßen Verfahrens und/oder des erfindungsgemäßen Separators können sich durch eine technisch sinnvolle Kombination einzelner oder mehrerer in der vorherigen Beschreibung aufgezeigter Merkmale sowie Maßnahmen ergeben und werden ausdrücklich im Rahmen der Erfindung mit beansprucht. Weitere Charakterisierungen und Spezifizierungen der Erfindung können sich insbesondere im Zusammenhang mit den nachfolgend beschriebenen Figuren ergeben, welche ebenfalls als Teil der Erfindung angesehen und beansprucht werden.

Vorteilhafte Einzelheiten und Wirkungen der Erfindung sind im Folgenden anhand in den Figuren schematisch dargestellter Ausführungsbeispiele näher erläutert.

Es zeigen:
- Fig. 1: einen erfindungsgemäßen Separator in perspektivischer Darstellungsweise,
- Fig. 2: eine erste Variante des Separators aus Fig. 1 in selber Darstellungsweise,
- Fig. 3: eine zweite Variante des Separators aus Fig. 1 in selber Darstellungsweise,
- Fig. 4: den Separator aus Fig. 1 in Kombination mit einem Salzwasser-Behälter im Gebrauch,
- Fig. 5: den Trenn-Vorgang unausgebrüteter ArtemiaDauereier und/oder deren Reste (Schalen) von geschlüpfter Artemia auf Basis der Darstellung in Fig. 4.

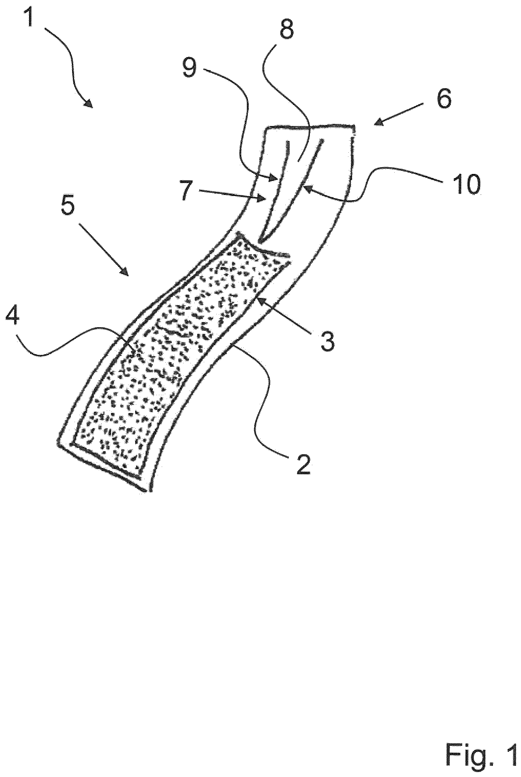

Fig. 1 zeigt einen erfindungsgemäßen Separator 1, welcher im Wesentlichen einen Basisträger 2 aufweist. In dem hier gezeigten Beispiel ist der Basisträger 2 als streifenförmige Platte aus einem flexiblen Trägermaterial gebildet. Hierdurch besitzt der Basisträger 2 eine rechteckige Außenkontur. Bei dem Basisträger 2 kann es sich grundsätzlich beispielsweise um ein wasserfestes Gewebe oder ein Kunststoffelement handeln.

Der Basisträger 2 des Separators 1 weist einen Nutzbereich 3 auf, welcher mit Artemia-Dauereiern 4 bestückt ist. Dabei sind die Artemia-Dauereier 4 derart an dem Basisträger 2 angeordnet, dass diese durch während der Benutzung des Separators 1 üblicherweise auftretende mechanische Einflüsse untrennbar an dem Basisträger 2 fixiert sind.

Die Festlegung erfolgt vorliegend über einen nicht näher dargestellten Klebstoff 5, welcher die Artemia-Dauereier 4 innerhalb des Nutzbereiches 3 mit dem Basisträger 2 verbindet. Bei dem Klebstoff 5 kann es sich um einen aktiven oder aktivierbaren Klebstoff 5 handeln.

In Bezug auf die Darstellung des Separators in Fig. 1 weist der Basisträger 2 eine an seinem oberen Endbereich 6 angeordnete Haltevorrichtung 7 auf. Bei der Haltevorrichtung 7 handelt es sich vorliegend um eine V-förmige Nase 8, welche über zwei V-förmig zueinander verlaufende Schnitte 9, 10 innerhalb des Basisträgers 2 aus diesem heraus ausgeschnitten ist. Hierdurch kann die Nase 8 der Haltevorrichtung 7 in nicht näher gezeigter Weise gegenüber der Ebene des Basisträgers 2 ausgestellt werden, so dass die Haltevorrichtung 7 eine im Wesentlichen hakenförmige Form aufweist.

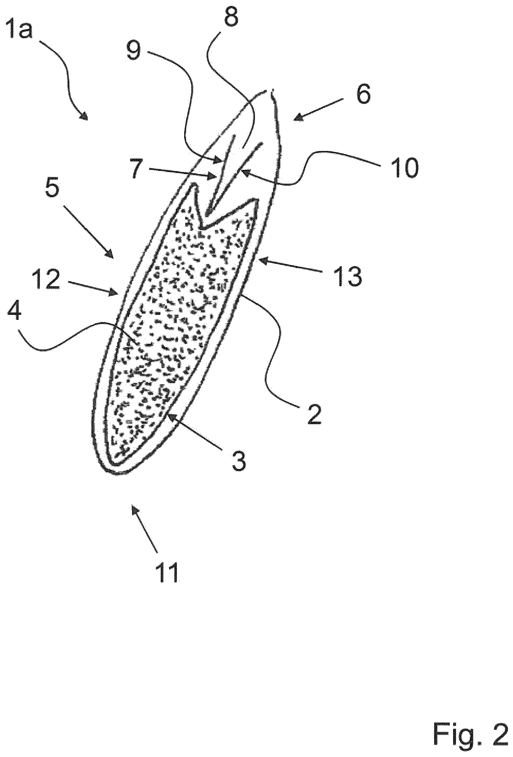

Fig. 2 zeigt eine alternative Ausgestaltung des erfindungsgemäßen Separators 1 in Form einer ersten Variante als Separator 1a. Gegenüber dem Separator 1 aus Fig. 1 weist der Basisträger 2 des hier dargestellten Separators 1a keine rechteckige, sondern eine langgezogene ovale Außenkontur auf. Hierdurch sind der obere Endbereich 6 und ein unterer Endbereich 11 des Basisträgers 2 entsprechend ausgerundet. Dabei sind beide gegenüberliegenden, sich zwischen den Endbereichen 6, 11 erstreckende Randbereiche 12, 13 des Basisträgers 2 entsprechend voneinander weg gekrümmt, so dass sich insgesamt die langgezogene ovale Form ergibt.

Wie zu erkennen, ist der mit Artemia-Dauereiern 4 bestückte Nutzbereich 3 derart an die Form des Basisträgers 2 angepasst, dass dieser den Krümmungen insbesondere des unteren Endbereiches 11 und der beiden Randbereiche 12, 13 in einem im Wesentlichen gleichbleibenden Abstand folgt. Zu der Haltevorrichtung 7 hin ist der Nutzbereich 3 dabei dergestalt, dass dieser zumindest ansatzweise an deren V-förmig ausgestaltete Nase 8 formangepasst ist. Mit anderen Worten weist der Rand des Nutzbereiches zu der Haltevorrichtung 7 hin keinen geraden Verlauf auf, sondern besitzt einen ebenfalls V-förmigen Verlauf.

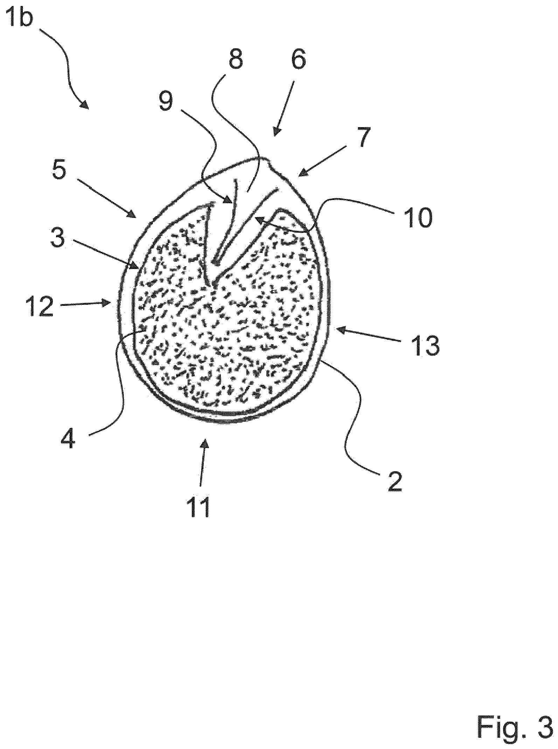

Fig. 3 stellt eine weitere zweite Variante des Separators 1 aus Fig. 1 in Form eines weiteren Separators 1b dar. Gegenüber den Ausgestaltungen aus den Fig. 1 und 2 weist der Basisträger 2 des hier gezeigten Separators 1b eine im Wesentlichen runde oder tropfenförmige Außenkontur auf. Dabei besitzen die beiden Randbereiche 12, 13 und der untere Randbereich 11 eine nahezu gleiche Krümmung, während der obere Randbereich 6 spitz zuläuft. Wie bereits an der ersten Variante in Fig. 2 erläutert, ist auch der Nutzbereich 3 der hier gezeigten zweiten Variante des Separators 1b in seiner äußeren Form insbesondere an den Verlauf der beiden Randbereiche 12, 13 und des unteren Randbereiches 11 des Basisträgers 2 in im Wesentlichen gleichbleibendem Abstand formangepasst. Ebenfalls besitzt der Nutzbereich 3 zu der Haltevorrichtung 7 hin einen V-förmigen Verlauf.

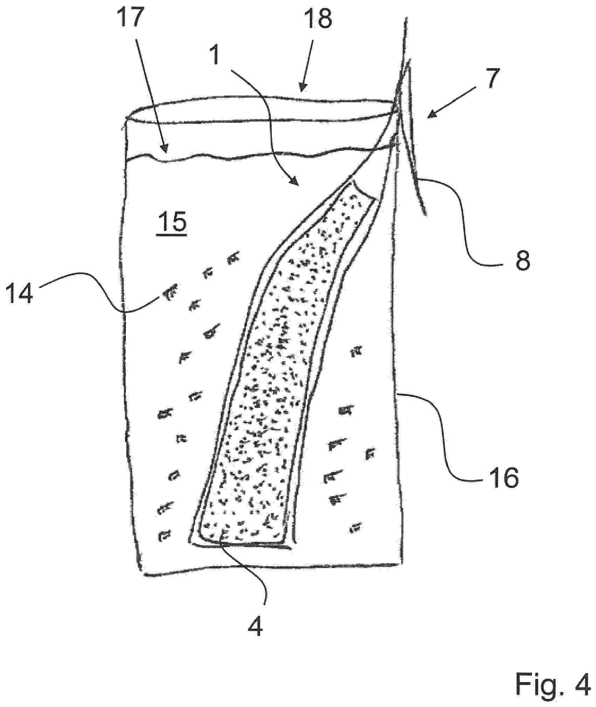

Fig. 4 ist ein Anwendungsfall zur Durchführung des erfindungsgemäßen Verfahrens zur Trennung ausgebrüteter und/oder unausgebrüteter Artemia-Dauereier 4 von bereits geschlüpfter Artemia 14, insbesondere Artemia salina, zu entnehmen. Dieser wird vorliegend anhand des Separators 1 aus Fig. 1 näher verdeutlicht.

Zunächst wurden die Artemia-Dauereier 4 in nicht näher dargestellter Weise an dem Separator 1 fixiert, indem dieser zuvor innerhalb seines Nutzbereiches 3 mit Klebstoff 5 benetzt wurde. Dieser Vorgang kann bevorzugt vor Weitergabe des bereits so bestückten Separators 1 beispielsweise an einen Endverbraucher erfolgen. Die Menge an Artemia-Dauereiern 4 kann beispielweise 1,0 bis 1,5 g betragen.

Der so ausgestattete Separator 1 wurde anschließend in einen mit Salzwasser 15 befüllten Behälter 16 eingelegt. Behälter 16, Wasserspiegel 17 des Salzwassers 15 und Haltevorrichtung 7 des Separators 1 sind dabei so aufeinander abgestimmt, dass zumindest der mit Artemia-Dauereiern 4 ausgestattete Nutzbereich 3 des Basisträgers 2 vollständig innerhalb des Salzwassers 15 angeordnet ist. Dabei ist der Separator 1 über die Haltevorrichtung 7 an einem Randbereich 18 des Behälters 16 angehängt und/oder abgestützt, indem dessen Nase 8 den Randbereich 16 zumindest teilweise umgreift.

Salzgehalt und Temperatur des Salzwassers 15 werden dabei so eingestellt, dass ideale Bedingungen für ein Schlüpfen freier Artemia 14 vorliegen.

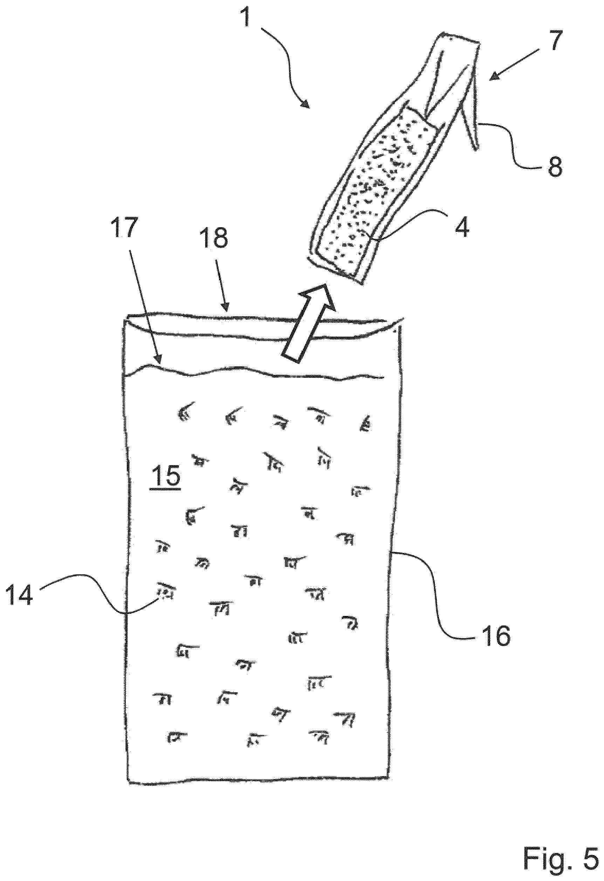

Fig. 5 stellt die erfindungsgemäße Maßnahme zum Trennen ausgebrüteter und/oder unausgebrüteter Artemia-Dauereier 4 von bereits geschlüpften Artemia 14 dar. Wie zu erkennen, wurde hierzu der Separator 1 aus dem Salzwasser 15 entnommen. Dabei verbleiben die ausgebrüteten (Reste) der Artemia-Dauereier 4 und etwaige nicht ausgebrütete Artemia-Dauereier 4 an dem Basisträger 2, so dass keinerlei freie Artemia-Dauereier 4 innerhalb des Salzwassers 15 zurückbleiben. Demgegenüber verbleibt die frei schwimmende geschlüpfte Artemia 14 innerhalb des Salzwassers 15 und kann beispielsweise direkt verfüttert und/oder zunächst aus dem Behälter 16 abgeschöpft werden.

## Patentansprüche

1. Verfahren zur Trennung ausgebrüteter und/oder unausgebrüteter Artemia-Dauereier (4) von bereits geschlüpfter Artemia (14), insbesondere Artemia salina, mittels eines Separators (1, 1a, 1b),
**gekennzeichnet durch** die Schritte:
- Festlegen unausgebrüteter Artemia-Dauereier (4) in oder an dem Separator (1, 1a, 1b),
- zumindest bereichsweises Einlegen des mit den Artemia-Dauereiern (4) ausgestatteten Separators (1, 1a, 1b) in Salzwasser (15),
- Ausbrüten wenigstens einiger der in oder an dem Separator (1, 1a, 1b) befestigten Artemia-Dauereier (4) innerhalb des Salzwassers (15) und
- Entfernen der nach dem zumindest teilweisen Schlüpfen von Artemia (14) verbleibenden ausgebrüteten und/oder unausgebrüteten Artemia-Dauereier (4) **durch** Entnahme des Separators (1, 1a, 1b) aus dem Salzwasser (15).

2. Verfahren nach Anspruch 1,
**dadurch gekennzeichnet,**
**dass** der Separator (1, 1a, 1b) vor, während oder nach seiner Bestückung mit unausgebrüteten Artemia-Dauereiern (4) zumindest bereichsweise mit einem Klebstoff (5) benetzt wird, um die Artemia-Dauereier (4) über den Klebstoff (5) an dem Separator (1, 1a, 1b) zu fixieren.

3. Verfahren nach Anspruch 1,
**dadurch gekennzeichnet,**
**dass** der Separator (1, 1a, 1b) zumindest bereichsweise mit einem Klebstoff (5) ausgestattet ist, wobei der Klebstoff (5) in Bezug auf seine adhäsive Eigenschaft vor, während oder nach dem Bestücken des Separators (1, 1a, 1b) mit unausgebrüteten Artemia-Dauereiern (4) aktiviert wird.

4. Verfahren nach einem der Ansprüche 1 bis 3,
**dadurch gekennzeichnet,**
**dass** der Separator (1, 1a, 1b) eine Haltevorrichtung (7) besitzt und das Salzwasser (15) in einem Behälter (16) angeordnet ist, wobei der mit Artemia-Dauereiern (4) bestückte und in das Salzwasser (15) eingelegte Separator (1, 1a, 1b) über die Haltevorrichtung (7) an einen Randbereich (18) des Behälters (16) angehängt und/oder an diesem abgestützt wird.

5. Separator zur Durchführung des Verfahrens nach einem der vorhergehenden Ansprüche, aufweisend einen Basisträger (2), wobei der Basisträger (2) dazu vorgesehen und ausgebildet ist, um Artemia-Dauereier (4) an diesem festzulegen.

6. Separator nach Anspruch 5,
**dadurch gekennzeichnet,**
**dass** der Basisträger (2) zumindest bereichsweise mit einem aktiven oder aktivierbaren Klebstoff (5) ausgestattet ist, wobei der Klebstoff (5) dazu vorgesehen und ausgebildet ist, um Artemia-Dauereier (4) in oder an dem Basisträger (2) zu fixieren.

7. Separator nach Anspruch 5 oder 6,
**gekennzeichnet durch**
eine Haltevorrichtung (7), wobei die Haltevorrichtung (7) dazu vorgesehen und ausgebildet ist, um den Separator (1, 1a, 1b) an einen Randbereich (18) eines Behälters (16) anzuhängen und/oder an diesem abzustützen.

8. Separator nach Anspruch 7,
**dadurch gekennzeichnet,**
**dass** die Haltevorrichtung (7) als ein Ausschnitt und/oder eine Ausstellung des Basisträgers (2) ausgebildet ist.

9. Separator nach einem der Ansprüche 5 bis 8,
**dadurch gekennzeichnet,**
**dass** der Basisträger (2) plattenförmig und/oder streifenförmig ausgebildet ist.

10. Separator nach einem der Ansprüche 5 bis 9,
**gekennzeichnet durch**
zumindest bereichsweise in und/oder an dem Basisträger (2) festgelegte Artemia-Dauereier (4).
